# EUROPEAN PATENT APPLICATION

(11) **EP 1 162 236 A1**
(43) Date of publication of application: **12.12.2001**
(21) Application number: 99973051.8
(22) Date of filing: 15.11.1999
(51) Int. Cl.: C08L 77/00, C08K 7/14, C08K 3/04, B60R 1/04

(54) **POLYAMIDE RESIN COMPOSITION AND VEHICULAR MIRROR-SUPPORTING PART COMPRISING THE SAME**

(30) Priority: 27.11.1998 JP 33641098
(71) Applicant: UNITIKA LTD., Amagasaki-shi, Hyogo 660-0824 (JP)
(72) Inventor: NEGI, Yukinari Unitika Ltd., Uji Plastics Plant, Kyoto 611-0021 (JP); WAKAMURA, Kazuyuki Unitika Ltd.,Uji Plastics Plant, Kyoto 611-0021 (JP); KAMITANI, Kenji Unitika Ltd., Uji Plastics Plant, Kyoto 611-0021 (JP); FUJII, Hiromu Unitika Ltd., Uji Plastics Plant, Kyoto 611-0021 (JP)
(74) Representative: VOSSIUS & PARTNER
(86) International application number: JP9906372
(87) International publication number: WO0032693

(57) **Abstract**

A polyamide resin composition with high stiffness, excellent in surface smoothness, surface glossiness and weather-color fastness without coating. This polyamide resin composition is characterized by that
0.2 to 5 parts by mass of a carbon black; and
0.01 to 10 parts by mass of a weathering agent;
are incorporated on the basis of 100 parts by mass in total of
30 to 90 parts by mass of a mixed polyamide resin containing a crystalline polyamide resin of 50 to 95 % by mass and a non-crystalline polyamide resin of 50 to 5 % by mass in such a way as to give 100 % by mass in total, and
10 to 70 parts by mass of a reinforcement material.

## Description

### Technical Field

The present invention relates to a polyamide resin composition with high stiffness and excellent in surface smoothness, surface glossiness and weather-color fastness without coating, and to supporting parts for vehicles' mirror formed of the composition.

The present invention especially relates to a polyamide resin composition, which can suitably be used for forming supporting parts for vehicles' mirror, such as a door mirror and a room mirror for car and a rearview mirror for motorcycle.

### Background Art

Traditionally, a polyamide resin composition, which is obtained by adding an inorganic filler such as glass fiber to a crystalline polyamide resin excellent in mechanical properties and durability, has been used for forming supporting parts for vehicles' mirror, such as a door mirror and a room mirror for car and a rearview mirror for motorcycle.

Such supporting parts for mirror are required to have high stiffness, therefore it is necessary that the resin composition includes a large quantity of inorganic filler such as glass fiber. When this resin composition is, however, used to be molded, the inorganic filler stands out on surface, so that surface smoothness and surface glossiness deteriorate to cause a problem, such as inferior external properties. Therefore, it is necessary that a coating is applied on the surface. However, the coating not only has a problem from the viewpoint of a working environment but also lowers a productivity and further there is a problem in which the coating increases a cost. Therefore, a material satisfying the external properties without coating is sought.

With respect to the resin composition including a large quantity of inorganic filler such as glass fiber, a mixed polyamide resin comprising a crystalline polyamide resin and a non-crystalline polyamide resin is proposed as a material for improving the external properties such as the surface smoothness and the surface glossiness (Japanese Patent Application Laid-Open Nos. Hei 2-255764, Hei 4-202358 and Hei 6-299068).

The inventors of the present invention propose a polyamide resin composition obtained by adding a fibrous reinforcement material and lamellar silicate to a mixed polyamide resin comprising a crystalline polyamide resin and a non-crystalline polyamide resin in Japanese Patent Application Laid-Open No. Hei 10-130494.

However, the supporting parts for vehicles' mirror, such as a door mirror and a room mirror for car and a rearview mirror for motorcycle, are used outdoors over the long term, therefore it is necessary to give not only high stiffness and good external properties but also excellent weather-color fastness to the resin composition.

Any polyamide resins disclosed in above official reports can not sufficiently satisfy the weather-color fastness.

It is an object of the present invention to solve above problems and to provide a polyamide resin composition with high stiffness and excellent in surface smoothness, surface glossiness and weather-color fastness without coating.

### Disclosure of Invention

The inventors of the present invention wholeheartedly made a study in order to solve above problems and could reach completion of the present invention.

The present invention relates to a polyamide resin composition, characterized by that
0.2 to 5 parts by mass of a carbon black; and
0.01 to 10 parts by mass of a weathering agent;
are incorporated on the basis of 100 parts by mass in total of
30 to 90 parts by mass of a mixed polyamide resin containing a crystalline polyamide resin of 50 to 95 % by mass and a non-crystalline polyamide resin of 50 to 5 % by mass as a polyamide ingredient in such a way as to give 100 % by mass in total, and
10 to 70 parts by mass of a reinforcement material, and to supporting parts for vehicles' mirror comprising the composition.

### Detailed Description of the Invention

The present invention will be described below in detail.

In a polyamide resin composition of the present invention, it is necessary to use;
30 to 90 parts by mass of a mixed polyamide resin containing of a crystalline polyamide resin of 50 to 95 % by mass and a non-crystalline polyamide resin of 50 to 5 % by mass as a polyamide ingredient in such a way as to give 100 % by mass in total, and
70 to 10 parts by mass of a reinforcement material.

If the mixing ratio of the non-crystalline polyamide resin in the mixed polyamide resin is less than 5 % by mass, a relaxation of crystallinity is not sufficient, and surface smoothness and surface glossiness are lost when the reinforcement material is added. Therefore, the polyamide resin composition can not be used for applications requiring external properties, such as supporting parts for vehicles' mirror. If the mixing ratio of the non-crystalline polyamide resin is more than 50 % by mass, the crystallinity is lowered. Therefore, a molding cycle of injection molding etc. is extended, so that productivity worsens.

If the mixing ratio of the reinforcement material is less than 10 parts by mass, the polyamide resin composition having high strength and high stiffness can not be obtained. If the mixing ratio of the reinforcement material is more than 70 parts by mass, moldability is lowered and good molded articles can not be obtained.

In the polyamide resin composition of the present invention, it is necessary to incorporate carbon black of 0.2 to 5 parts by mass and a weathering agent of 0.01 to 10 parts by mass with respect to 100 parts by mass of the sum of the mixed polyamide resin and the reinforcement material in order to give weather-color fastness. It is preferable to incorporate the carbon black of 1 to 3 parts by mass and the weathering agent of 0.5 to 10 parts by mass.

If the mixing ratio of the carbon black is less than 0.2 parts by mass or the mixing ratio of the weathering agent is less than 0.01 parts by mass, the weather-color fastness can not be achieved sufficiently on the occasion of being used in the outdoors over the long term.

On the other side, it is not preferable to add the carbon black at a mixing ratio of more than 5 parts by mass or the weathering agent at a mixing ratio of more than 10 parts by mass because mechanical strength of the resin composition is lowered.

In the present invention, the polyamide resin composition excellent in the weather-color fastness means such a resin composition as has a color-difference value ΔE of not more than 10, preferably not more than 8 when the weather-color fastness is evaluated as described later.

As for the crystalline polyamide resin contained in the mixed polyamide resin constituting the resin composition of the present invention, the following resins are exemplified. Polycapramide (nylon 6), poly(hexamethylene adipamide) (nylon 66), poly(tetramethylene adipamide)(nylon 46), poly(hexamethylene sebacamide)(nylon 610), poly(hexamethylene dodecamide)(nylon 612), poly(undecamethylene adipamide)(nylon 116), poly[bis(4-aminocyclohexyl)methane dodecamide] (nylon PACM 12), poly[bis(3-methyl-4-aminocyclohexyl)methane dodecamide] (nylon dimethyl PACM 12), poly(nonamethylene terephthalamide) (nylon 9T), / poly(undecamethylene terephthalamide)(nylon 11T), poly(undecamethylene hexahydroterephthalamide)[nylon 11T(H)], polyundecamide (nylon 11), polydodecamide (nylon 12), poly(trimethylhexamethylene terephthalamide) (nylon TMDT), poly(hexamethylene isophthalamide)(nylon 6I), poly(hexamethylene terephthal/isophthalamide)(nylon 6T/6I), poly(methaxylylene adipamide) (nylon MXD 6), and a copolymer or mixture thereof may be used. A reinforced polyamide resin with laminar silicate dispersed in the above-mentioned polyamide resin on the molecular level can also be used. Among the above crystalline polyamide resins, nylon 6, nylon 66, and the copolymer polyamide and the mixed polyamide thereof are preferably used.

The non-crystalline polyamide resin contained in the mixed polyamide resin constituting the resin composition of the present invention is used for relaxation of crystallinity, and has an amount of melting heat of not more than 4.2 J/g when measured at a heating rate of 16 °C/min. under a nitrogen atmosphere by a differential scanning calorimeter. The following resins are exemplified. Isophthalic acid/terephthalic acid/hexamethylenediamine/bis(3-methyl-4-aminocyclohexyl)methane polycondensate, terephthalic acid/2,2,4-trimethylhexamethylenediamine/2,4,4-trimethylhexamethylenediamine polycondensate, isophthalic acid/bis(3-methyl-4-aminocyclohexyl)methane/ω-laurolactam polycondensate, isophthalic acid/terephthalic acid/hexamethylenediamine polycondensate, isophthalic acid/2,2, 4-trimethylhexamethylenediamine/2,4,4-trimethylhexamethylenediamine polycondensate, isophthalic acid/terephthalic acid/2,2,4-trimethylhexamethylenediamine/2,4,4-trimethylhexamethylenediamine polycondensate, terephthalic acid/bis(3-methyl-4-aminocyclohexyl)methane/ε-caprolactam polycondensate etc. are exemplified. Polycondensates, in which a benzene ring of terephthalic acid component and/or isophthalic acid component constituting these polycondensates is substituted by an alkyl group or a halogen atom, are also included. These non-crystalline polyamides can also be used in combination of two or more kinds. Among those, isophthalic acid/terephthalic acid/hexamethylenediamine/bis(3-methyl-4-aminocyclohexyl)methane polycondensate, isophthalic acid/terephthalic acid/hexamethylenediamine polycondensate, and terephthalic acid/bis(3-methyl-4-aminocyclohexyl)methane/ε-caprolactam polycondensate etc. are preferably used.

A relative viscosity of the mixed polyamide resin is not particularly limited, but preferably within the range between 1.5 and 4.0, more preferably 1.8 and 2.8 when the relative viscosity is measured under the conditions of a temperature of 25 °C and a concentration of 1 g/dl using 96 % by mass-concentrated sulfuric acid as a solvent. If the relative viscosity is less than 1.5, it is difficult to obtain molded articles with desired physical properties because of the lower viscosity. If the relative viscosity is more than 4.0, flow properties deteriorate in a molding and processing process because of the higher viscosity and a sufficient injection pressure can not be applied, resulting in tendency of poor moldability.

With respect to the reinforcement material in the present invention, not being specifically limited, glass fiber can suitably be used when mechanical properties, economical efficiencies etc. are totally taken into consideration. The use of lamellar silicate together with glass fiber is particularly preferable because lamellar silicate relaxes an orientation of glass fiber to improve surface smoothness and surface glossiness of molded articles.

A fiber length of glass fiber is preferably 0.1 to 7 mm, especially 0.3 to 5 mm. A diameter of glass fiber is preferably within 6 to 15 µm, especially 8 to 13 µm.

As for lamellar silicate, not being specifically limited, mica, talc, and a mixture thereof can suitably be used. These lamellar silicate materials may be surface-treated with a coupling agent etc.

A mean flake diameter of mica is preferably 30 to 1000 µm, and an aspect ratio is preferably 20 to 300.

A degree of fineness of talc is preferably not more than 400 mesh.

With respect to other reinforcement materials, for example, kaolin, clay, calcium carbonate, zinc carbonate, wollastonite, silica, alumina, magnesium oxide, calcium silicate, sodium aluminate, sodium aluminosilicate, glass balloon, hydrotalcite, metal fiber, metal whisker, ceramics whisker, potassium titanate whisker, boron nitride, graphite, inorganic fiber such as silicon carbide fiber, alumina fiber and aluminium borate whisker, aramide fiber, carbon fiber and the like can be used.

The carbon black in the present invention is a material constituted by particles, wherein fine crystals with pseudo-graphite structure constitute crystal lattices in parallel and the crystal lattices aggregate to form the particles. In general, such a carbon black can be produced by a furnace method, in which an incomplete combustion of stock oil is performed in a sealed furnace. The carbon black produced by such a method, so called a raw carbon, may be used. However, a treated carbon obtained by treating a carbon black with a plasticizer or a surface-treating agent is preferably used in consideration of a workability. As for the treated carbon, the one treated with polyethylene wax having a binder function and polyethylene has generally been used. However, the treated carbon treated by using the above resins as a binder is exposed to a condition of high temperature for molding, so that the binder resin is decomposed to generate gas and a whitening, being called flow mark, arises around a gate on a surface of a molded article in some cases. Therefore, when such a treated carbon is used in the present invention, it is preferable that an amount of addition of the carbon black is increased in order to put the flow mark in the shade. It is preferable to use acrylonitrile-styrene resin (AS resin) with high heat-resistance and the like as the binder resin.

The carbon black has not only a function as a colorant but also a function as a weathering agent. An absorbance of the carbon black depends on an aggregate diameter of a structure formed by fusion-bonds of carbon black particles and, in the region of ultraviolet ray, a peak of the absorbance appears when the aggregate diameter is about 72 nm. Therefore, an aggregate diameter of the carbon black is preferably adjusted within the range of 65 to 85 nm. If the aggregate diameter is less than 65 nm or more than 85 nm, a weather-color fastness worsens.

The weathering agent in the present invention prevents a photo-deterioration of the polyamide resin by absorbing and blocking ultraviolet light or inhibits a decomposition of the polymer by catching radicals generated by means of ultraviolet light or heat. For example, an ultraviolet light-screening agent, a light stabilizer, an ultraviolet light absorber, an antioxidant and the like can suitably be used. These materials may be used alone or in combination of two or more kinds, but, when the materials are used in combination, a synergistic effect is obtained to achieve a more excellent weather-color fastness.

With respect to the ultraviolet light-screening agent, inorganic fine particles coated with cerium oxide can suitably be used. The inorganic fine particles coated with cerium oxide are particles, in which cerium oxide fine particles are crystallized on the surface of a base pigment. As for the base pigment, silica, talc and mica, having a refractive index of 1.5 to 1.6, can suitably be used. A mean particle size of the ultraviolet light-screening agent of the silica base and the talc base is 1 to 3 µm and that of the mica base being 2 to 4 µm. The cerium oxide fine particles crystallized on the surface of the base pigment are excellent in ultraviolet light-screening properties and have a mean particle size of 0.03 to 0.05 µm. The inorganic fine particles having such a constitution, even when ultraviolet light is irradiated, convert the ultraviolet light into a low amount of heat energy without absorbing the ultraviolet light and release the heat energy. Therefore, the inorganic fine particles work as an ultraviolet light-screening agent. When amorphous silica is furthermore coated on the surface of the inorganic fine particles with cerium oxide fine particles crystallized on the surface of the base pigment, stability as the ultraviolet light-screening agent is furthermore improved.

As the ultraviolet light-screening agent, for example, a trade name Seriguard S-3018-02 made by Nippon Inorganic Colour & Chemical Co., Ltd. can suitably be used.

With respect to the light stabilizer, hindered amine compounds having one or more structures represented by the following formula (1), copper compounds, and/or halogenated potassium are exemplified. 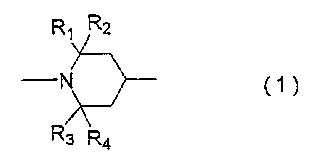 [R₁, R₂, R₃, R₄ represent alkyl groups having 1 to 6 carbon atoms and may respectively be the same or different.]

As for the concrete examples, 4-benzoyloxy-2,2,6,6-tetramethylpiperidine, bis-(2,2,6,6-tetramethyl-4-piperidyl)adipate, bis-(2,2,6,6-tetramethyl-4-piperidyl)suberate, bis-(2,2,6,6-tetramethyl-4-piperidyl)sebacate, bis-(2,2,6,6-tetramethyl-4-piperidyl)phthalate, bis-(2,2,6,6-tetramethyl-4-piperidyl)terephthalate, bis-(1,2,2,6,6-pentamethyl-4-piperidyl)sebacate, bis-(1,2,2,6,6-pentamethyl-4-piperidyl)terephthalate, N,N'-bis-(2,2,6,6-tetramethyl-4-piperidyl)adipamide, bis-(1,2,2,6,6-pentamethyl-4-piperidyl)-n-butyl(3,5-di-t-butyl-4-hydroxybenzyl)malonate, bis-(2,2,6,6-tetramethyl-4-piperidyl)-n-butyl(3,5-di-t-butyl-4-hydroxybenzyl)malonate, tetra-(2,2, 6, 6-tetramethyl-4-piperidyl)ester of butanetetracarboxylic acid, 1-[2-[3-(3,5-di-t-butyl-4-hydroxyphenyl)propionyloxy]ethyl]-4-[3-(3,5-di-t-butyl-4-hydroxyphenyl)propionyloxy]2,2,6,6-tetramethylpiperidine, poly[[6-(1,1,3,3-tetramethylbutyl)imino-1,3,5-triazine-2,4-diyl][(2,2,6,6-tetramethylpiperidyl)imino]hexamethylene[(2,2,6,6-tetramethyl-4-piperidyl)imino]], tetrakis(1,2,2,6,6-pentamethyl-4-piperidyl)1,2,3,4-butanetetracarboxylate, tetrakis(2,2,6,6-tetramethyl-4-piperidyl)1,2,3,4-butanetetracarboxylate, dimethyl-1-(2-hydroxyethyl)-4-hydroxy-2,2,6,6-tetramethylpyperidine succinate, condensate of 1,2,3,4-butanetetracarboxylic acid, 2,2,6,6-tetramethyl-4-piperidinol and β,β,β',β'-tetramethyl-3,9-[2,4,8,10-tetraoxaspiro(5,5)undecane]diethanol, condensate of 1,2,3,4-butanetetracarboxylic acid, 1,2,2,6,6-pentamethyl-4-piperidinol and β,β,β',β'-tetramethyl-3,9-[2,4,8,10-tetraoxaspiro(5,5)undecane]diethanol, and the like are exemplified. Bis-(2,2,6,6-tetramethyl-4-piperidyl)sebacate is suitably used. These compounds may be used alone or in combination of two or more kinds.

As the hindered amine compounds, for example, a trade name Sanol LS-770 made by Sankyo Co., Ltd. can suitably be used.

As for the copper compound, for example, cuprous chloride, cupric chloride, cuprous bromide, cupric bromide, cuprous iodide, copper acetate, copper propionate, copper benzoate, copper adipate, copper terephthalate, copper isophthalate, copper sulfate, copper phosphate, copper borate, copper nitrate, copper stearate, copper complex salt obtained by coordinating to chelating agent and the like are exemplified. Among the above compounds, cuprous iodide can suitably be used. These copper compounds may be used alone or in combination of two or more kinds.

As for the halogenated potassium, for example, potassium iodide, potassium bromide and potassium chloride are exemplified. Among the above-halogenated potassium, potassium iodide can suitably be used. These halogenated potassiums may be used alone or in combination of two or more kinds.

With respect to a combination of the copper compound and the halogenated potassium, the combination of cuprous iodide and potassium iodide can most suitably be used in order to improve a weather-color fastness.

With respect to the ultraviolet light absorber, benzotriazoles, benzophenones, phenylsalicylates, triazines, and cyano acrylates and the like are exemplified as the ultraviolet light absorbers.

As for the benzotriazole ultraviolet light absorber, 2-(5-methyl-2hydroxyphenyl)benzotriazole, 2-[2-hydroxy-3,5-bis(α,α-dimethylbenzyl)phenyl]-2H-benzotriazole, 2-(2'-hydroxy-5'-t-octylphenyl)benzotriazole, 2,2-methylenebis-[4-(1,1,3,3-tetramethylenebutyl)-6-(2H-benzotriazole-2-yl)phenol] and the like are exemplified.

As the benzotriazole ultraviolet light absorber, for example, a trade name Tinuvin-900 made by Ciba-Geigy Corp. can suitably be used.

As for the benzophenone ultraviolet light absorber, 2-hydroxy-4-octoxybenzophenone, 2,4-dihydroxybenzophenone, 2-hydroxy-4-methoxy-4'-chlorobenzophenone, 2,2-dihydroxy-4-methoxybenzophenone, 2,2-dihydroxy-4,4'-dimethoxybenzophenone and the like are exemplified.

As the benzophenone ultraviolet light absorber, for example, a trade name ADK.STAB 1413 made by Asahi Denka Kogyo K.K. can suitably be used.

As for the phenylsalicylate ultraviolet light absorber, para-t-butylphenylsalicylate, para-octylphenylsalicylate and the like are exemplified.

As for the triazine ultraviolet light absorber, 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-6-(2-hydroxy-4-propoxyphenyl)-1,3,5-triazine, 2,4-diphenyl-6-(2-hydroxy-4-butoxyphenyl)-1,3,6-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-butoxyethoxy)-1,3,5-triazine and the like are exemplified.

As the triazine ultraviolet light absorber, for example, Cyasorb UV-1164 made by Sun Chemical Co., Ltd. can suitably be used.

As for the cyano acrylate ultraviolet light absorber, ethyl-2-cyano-3,3-diphenyl acrylate, 2-ethylhexyl-2-cyano-3,3-diphenyl acrylate and the like are exemplified.

As the cyano acrylate ultraviolet light absorber, for example, a trade name Uvinul N-539, 3035, and 3039 made by BASF K.K. can suitably be used.

With respect to the antioxidant, hindered phenols, phosphites, and thioethers and the like are exemplified as the antioxidants.

As the hindered phenol antioxidant, compounds represented by the following chemical formula (2) or the following general formula (3), having a molecular weight of not less than 450, may be used. 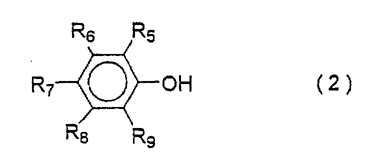 [R₅ represents an alkyl group having 1 to 20 carbon atoms, and R₆ to R₉ represent respectively a hydrogen atom, an alkyl group having 1 to 30 carbon atoms or a monovalent organic group.] 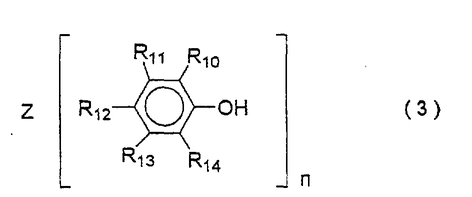 [R₁₀ represents an alkyl group having 1 to 20 carbon atoms, three groups of R₁₁ to R₁₄ represent independently a hydrogen atom, an alkyl group having 1 to 30 carbon atoms, a monovalent organic group, the other group represents a chemical bond, n is an integer of 2 to 4, and Z represents a group having a valence of n.]

If the molecular weight is less than 450, the hindered phenol compounds are likely to be decomposed and a generation of gas etc. occurs. Therefore, the hindered phenol compounds having such a molecular weight is undesirable. As for R₅ in the above formula (2) and R₁₀ in the above formula (3), for example, -CH₃, -C₂H₅, -C₃H₇, - C(CH₃)₃, -C₄H₉ and the like are exemplified. Among the above groups, -C(CH₃)₃ is especially preferable.

As for the hindered phenol antioxidant, for example, triethylene glycol-bis-3-(3'-t-butyl-4'-hydroxy-5-methylphenyl)propionate, 1,3,5-tris(3',5'-di-t-butyl-4'-hydroxybenzoyl)isocyanurate, 1,3,5-trimethyl-2,4,6-tris(3',5'-di-t-butyl-4'-hydroxy-benzyl)benzene, hexamethylene glycol-bis-[β-(3, 5-di-t-butyl-4-hydroxy-phenyl)propionate], 6-(4'-hydroxy-3',5'-di-t-butylanilino)-2,4-bis-octyl-thio-1,3,5-triazine, tetrakis-[methylene-3(3',5'-di-t-butyl-4'-hydroxy-phenyl)propionate]methane, 2,2'-thio[diethyl-bis-3(3",5"-di-t-butyl-4"-hydroxyphenyl)propionate], n-octadecyl-3-(4'-hydroxy-3',5'-di-t-butylphenol)propionate, N,N'-hexamethylene-bis-3-(3',5'-di-t-butyl-4'-hydroxy-propamide), 1,3,5-tris(3',5'-di-t-butyl-4'-hydroxybenzyl)isocyanurate, 3',5'-di-t-butyl-4'-hydroxy-benzylphosphoric acid dimethyl ester, nickel salt of bis(3,5-di-t-butyl-4-hydroxybenzylphosphoric acid) monomethyl ester and the like are exemplified. N,N'-hexamethylene-bis-3-(3',5'-di-t-butyl-4'-hydroxy-propamide) can suitably be used. These compounds may be used alone or in combination of two or more kinds.

As the hindered phenol antioxidant, for example, Irganox 1098, and B1171 being a mixture of the Irganox 1098 and a phosphorus compound, which are made by Ciba-Geigy Corp., and the like can suitably be used.

As for the phosphite antioxidant, triphenyl phosphite, trioctadecyl phosphite, tridecyl phosphite, trinonylphenyl phosphite, diphenylisodecyl phosphite, bis(2,6-di-t-butyl-4-methylphenyl)pentaerythritol diphosphite, bis(2,4-di-t-butylphenyl)pentaerythritol diphosphite, tris (2, 4-di-t-butylphenyl)phosphite, distearyl pentaerythritol diphosphite, tetra(tridecyl-4,4'-isopropylidendiphenyl diphosphite, 2,2-methylenebis(4,6-di-t-butylphenyl)octyl phosphite and the like are exemplified.

As the phosphite antioxidant, for example, a trade name ADK.STAB PEP-36 made by Asahi Denka Kogyo K.K. can suitably be used.

As for the thioether antioxidant, distearyl β,β'-thiobutyrate, laurylstearyl thiodipropionate, dimyristyl thiodipropionate, dilauryl thiodipropionate, distearyl thiodipropionate, tetrakis[methylene-3-(dodecylthio)propionate]methane and the like are exemplified.

As the thioether antioxidant, for example, a trade name ADK.STAB AO-412S made by Asahi Denka Kogyo K.K. can suitably be used.

In present invention, a method for mixing the reinforcement material, the carbon black, the weathering agent and the like into the mixed polyamide resin is not especially limited, as long as such a state that each ingredient is uniformly dispersed is achieved. In detail, the carbon black, the weathering agent and the like are added to pellets of the polyamide resin, and the mixture is uniformly blended by a tumbler or Henschel Mixer. The obtained mixture is then introduced to an extruder and, when the mixture is melted, the reinforcement material is introduced thereto. The resultant mixture is pelletized and then molded.

With respect to a molding method of the polyamide resin composition in present invention, molding methods conventionally known, such as an extrusion molding method, an injection molding method, and a press molding method, can be applied, but the injection molding method may especially be preferable.

Various additives, such as a mold release agent, a flame-retardant, an impact modifier, a flow modifier, a blowing agent and the like can be added to the polyamide resin composition of the present invention, so long as properties of the resin composition is not remarkably deteriorated.

In respect of the mold release agent, it is preferable to use aliphatic bisamide, metallic salt of higher fatty acid, and montanic acid ester wax.

As for the aliphatic bisamide, for example, methylenebisstearylamide, methylenebislaurylamide, ethylenebisstearylamide, ethylenebislaurylamide, ethylenebisoleylamide, ethylenebisbehenylamide and the like are exemplified, but it is especially preferable to use ethylenebisstearylamide.

In respect of the metallic salt of higher fatty acid, metallic salts of stearic acid, palmitic acid, lauric acid, myristic acid and montanic acid are exemplified, but it is especially preferable to use metallic salts of stearic acid and montanic acid. As for concrete examples thereof, calcium stearate, magnesium stearate, barium stearate, aluminium stearate, zinc stearate, sodium montanate, calcium montanate and the like are exemplified.

Molded articles obtained using the polyamide resin composition of the present invention are excellent in strength, stiffness, and weather-color fastness, and their surfaces are smooth and excellent in glossiness. Therefore, the polyamide resin composition of the present invention can suitably be used for forming supporting parts for vehicles' mirror, such as a door mirror and a room mirror for car and a rearview mirror for motorcycle, in particular, a stay for a door mirror.

### Best Embodiment for Carrying Out the Invention

The present invention is explained in detail on the basis of Examples.

In the following Examples and Comparative Examples, various physical properties were measured according to the following methods.
(1) Degree of surface glossiness (gloss)
   A test bar having a size of 50 mm x 90 mm and a thickness of 2 mm was prepared and a gloss value of the test bar was measured at an angle of incidence of 60-degree by a glossmeter.
(2) Surface roughness (µm)
   A test bar having a size of 50 mm x 90 mm and a thickness of 2 mm was prepared and a mean roughness (µm) on surface of the test bar was measured by a surface roughness gauge.
(3) Flexural modulus (GPa)
   According to a method described in ASTM-D790, a measurement was carried out.
(4) Flexural strength (MPa)
   According to a method described in ASTM-D790, a measurement was carried out.
(5) Weather-color fastness
   A flat test bar having a size of 50 mm x 90 mm and a thickness of 2 mm was prepared and was irradiated by ultraviolet light for 600 hours at a degree of ultraviolet irradiation of 1 mW/mm² by a artificial accelerated weathering machine (made by Dipla Wintes Co., Ltd., Eye Super UV Tester). Such an amount of ultraviolet irradiation is equivalent to a 10-year amount of ultraviolet irradiation out of door. Then, a surface of the test bar was subjected to measurement using a spectrophotometer (made by Nippon Densyoku Industries Co., Ltd., SZ-Σ90) and a color difference value ΔE was evaluated as an index. The smaller the value of ΔE is, the better a weather-color fastness is.
(6) Presence of flow mark
   A test bar having a size of 50 mm x 90 mm and a thickness of 2 mm was prepared and evaluated with respect to a haze developing around a gate. The test bar without a haze was represented as O, the one with a slight haze was represented as Δ, and the one with a considerable haze was represented as x.
(7) Evaluation of mold release characteristics
   Mold release characteristics were evaluated by observing and comparing a deformation/whitening caused by an ejector pin when cooled for 10 seconds after molded by using a cup-type mold tool having a draft angle (a draft angle of 0.5 degree) with a mold temperature controlled to 80°C. The molded product without the deformation/whitening by the ejector pin was represented as ⓞ, the one with a slight deformation/whitening was represented as ○, and the one with a considerable deformation/whitening was represented as Δ.

Materials used in Examples and Comparative Examples are shown in Table 1.

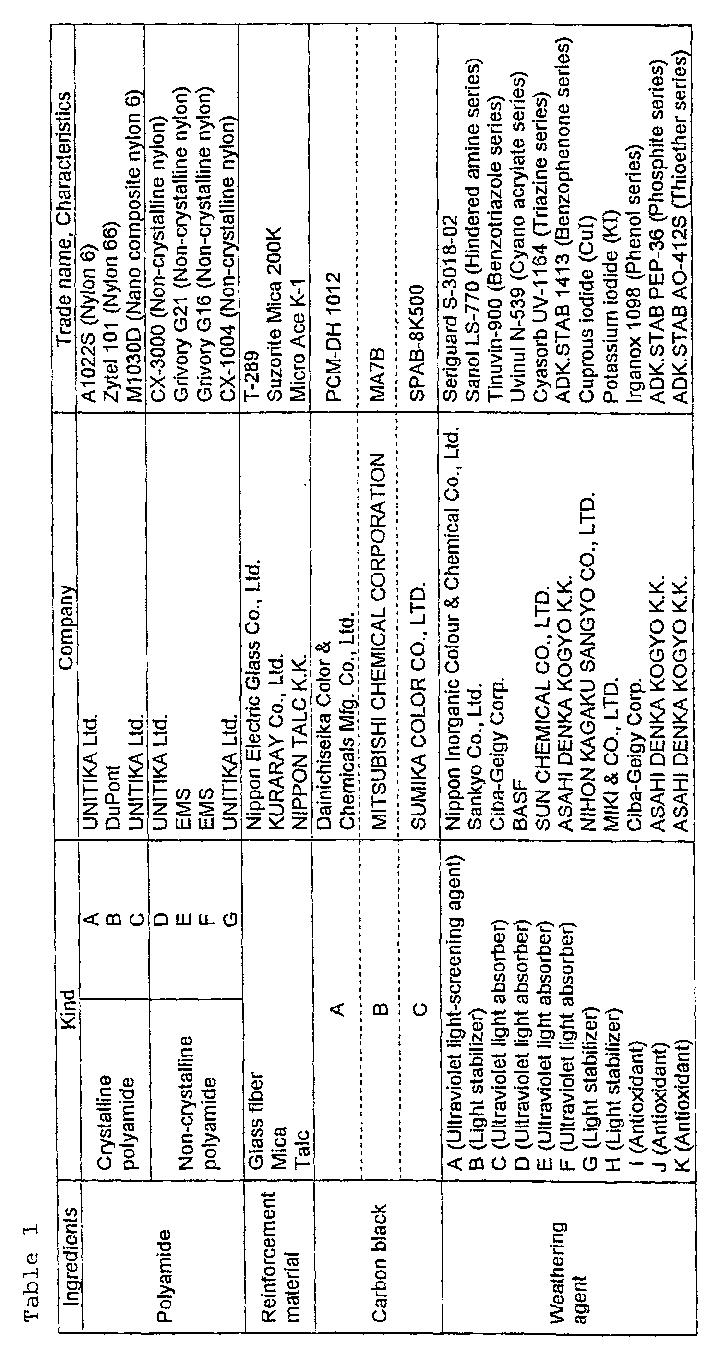

### Example 1

As a polyamide ingredient, a mixed polyamide resin was prepared so that the sum of nylon 6 (made by Unitika Ltd., A1022S) which was a crystalline polyamide resin A of 60 % by mass and non-crystalline nylon (made by Unitika Ltd., CX-3000) which was a non-crystalline polyamide resin D of 40 % by mass was 100 % by mass. The resin of CX-3000 was a polycondensate of isophthalic acid / terephthalic acid / hexamethylenediamine / bis(3-methyl-4-aminocyclohexyl)methane.

As a reinforcement material, glass fiber (made by Nippon Electric Glass Co., Ltd., T-289) of 50 parts by mass and mica (made by Kuraray Co., Ltd., Suzorite Mica 200K) of 10 parts by mass were used in a total amount of 60 parts by mass.

A carbon black A (Dainichiseika Color & Chemicals Mgf. Co., Ltd., PCM-DH1012) of 1 part by mass, a weathering agent A [ultraviolet light-screening agent] (made by Nippon Inorganic Colour & Chemical Co., Ltd., Seriguard S-3018-02) of 3 parts by mass, a weathering agent G [light stabilizer] (made by Nihon Kagaku Sangyo Co., Ltd., cuprous iodide) of 0.03 parts by mass, and a weathering agent H [light stabilizer] (made by Miki & Co., Ltd., potassium iodide) of 0.1 parts by mass were mixed with respect to 100 parts by mass of the sum of the mixed polyamide resin of 40 parts by mass and the reinforcement material of 60 parts by mass.

The carbon black A was a treated carbon comprising carbon black of 45 % by mass and polyethylene wax of 55 % by mass and had an aggregate diameter of 84 nm.

At the above-mentioned mixing ratio, the mixed polyamide resin, the reinforcement material, the carbon black, and the weathering agent were melted and kneaded by means of a twin-screw extruder (made by Toshiba Machine Co., Ltd., TEM-50), being set to a cylinder temperature of 270°C, the number of screw revolutions of 200 rpm and a discharge rate of 150 kg/hr, and the kneaded material was then extruded in a strand form and cooled. The cooled material was cut to produce resin pellets. The ingredients other than glass fiber were introduced from a feed-opening hopper after being uniformly blended, and the glass fiber was introduced from a side feeder of the extruder.

The resultant resin pellets were dried at a temperature of 100°C for 12 hours.

Using these pellets, an injection molding was performed by means of a injection molding machine (made by Toshiba Machine Co., Ltd., IS-100E), being set to a cylinder temperature of 270°C and a mold temperature of 80°C, in order to obtain some test bars for measuring degree of surface glossiness, surface roughness, flexural modulus, flexural strength and weather-color fastness.

Measurement results of the obtained test bars with respect to degree of surface glossiness, surface roughness, flexural modulus, flexural strength and weather-color fastness were shown in Table 2.

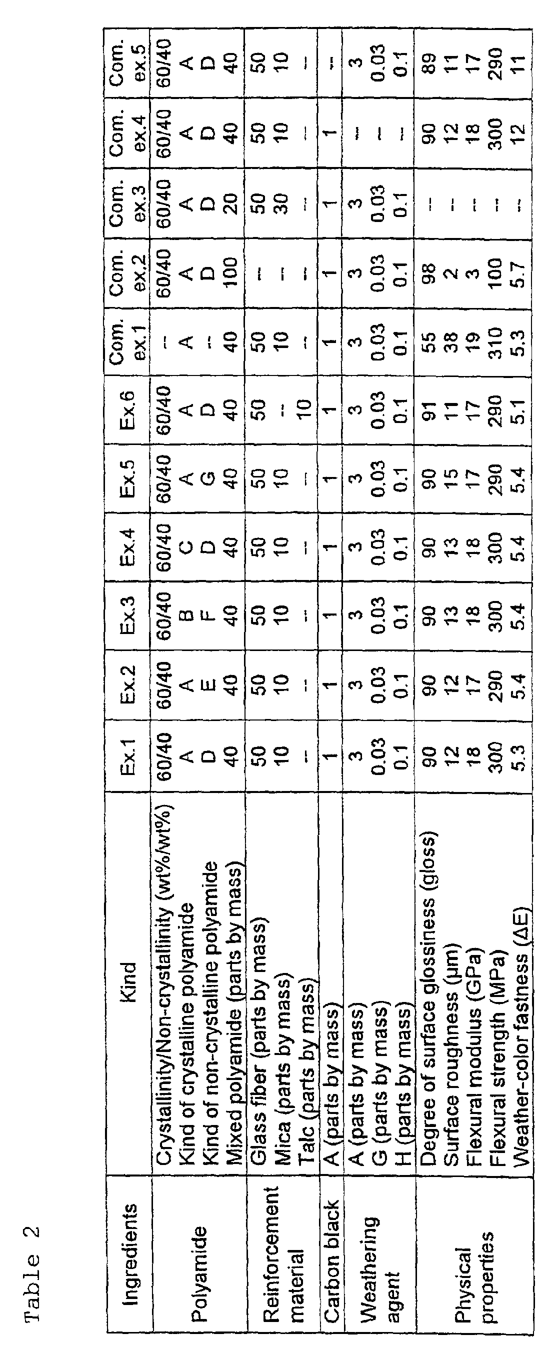

### Examples 2 to 6

As a polyamide resin and a reinforcement material constituting a resin composition, the materials shown in Table 2 were used, and mixing ratios thereof were set to the values shown in Table 2. Test bars were produced in the same manner as the production method in Example 1 except for the above.

Measurement results of the obtained test bars were shown in Table 2.

In every Example 1 to 6, the crystalline polyamide and the non-crystalline polyamide were incorporated as the polyamide ingredient, so that a glossy test bar having a degree of surface glossiness of not less than 90 gloss was obtained due to relaxation of crystallinity by the non-crystalline polyamide. Mica or talc was mixed as a reinforcement material, so that an undulation developing on surface of the test bar due to an orientation of glass fiber was inhibited and the test bar having smaller surface roughness was obtained. The reinforcement material was mixed within the range of the present invention, so that the test bar excellent in flexural modulus and flexural strength was obtained. The carbon black was mixed, so that the test bar colored in black was obtained without coating. Furthermore, the weathering agent was mixed at a ratio of the present invention in addition to the above carbon black, so that the test bar with a smaller color difference value ΔE and excellent in weather-color fastness was obtained.

### Comparative Example 1

As a polyamide ingredient, nylon 6 which was the crystalline polyamide was used alone without use of the non-crystalline polyamide. A test bar was produced in the same manner as in Example 1 except for the above.

Measurement results of the obtained test bar were shown in Table 2.

### Comparative Example 2

The mixed polyamide resin prepared in Example 1 was used alone in an amount of 100 parts by mass without mixing the reinforcement material. A test bar was produced in the same manner as in Example 1 except for the above.

Measurement results of the obtained test bar were shown in Table 2.

### Comparative Example 3

A ratio of the mixed polyamide resin to the resin composition was set to a value smaller than the lower limit of the present invention. It was tried to produce a test bar in the same manner as in Example 1 except for the above, but the test bar could not be produced because of a poor moldability.

### Comparative Example 4

A resin composition was prepared without mixing the weathering agent. A test bar was produced in the same manner as in Example 1 except for the above.

Measurement results of the obtained test bar were shown in Table 2.

### Comparative Example 5

A resin composition was prepared without mixing the carbon black. A test bar was produced in the same manner as in Example 1 except for the above.

Measurement results of the obtained test bar were shown in Table 2.

In the Comparative Example 1, as the non-crystalline polyamide resin was not incorporated, the relaxation of crystallinity was not achieved and a degree of surface glossiness was low or 55 gloss, resulting in poor feeling of glossiness. Orientation of glass fiber could not be inhibited, resulting in large surface roughness.

In Comparative Example 2, the reinforcement material was not incorporated, so that flexural modulus and flexural strength were inferior.

In Comparative Example 3, the mixing ratio of the mixed polyamide resin was smaller than the lower limit value in the present invention, so that the test bar could not be produced because of poor moldability.

In Comparative Example 4, as the weathering agent was not mixed, a color difference value ΔE became high or not less than 10, resulting in poor weather-color fastness.

In Comparative Example 5, as the carbon black was not mixed, a color difference value ΔE became high or not less than 10, resulting in poor weather-color fastness.

### Example 7

A mixed polyamide resin was prepared so that the sum of nylon 6 (made by Unitika Ltd., A1022S) which was the crystalline polyamide resin A of 70 % by mass and non-crystalline nylon (made by Unitika Ltd., CX-3000) which was the non-crystalline polyamide resin D of 30 % by mass was 100 % by mass. As a reinforcement material, glass fiber (made by Nippon Electric Glass Co., Ltd., T-289) was used alone. The sum of the mixed polyamide resin of 50 parts by mass and the glass fiber of 50 parts by mass was set to 100 parts by mass.

A test bar was produced in the same manner as in Example 1 except for the above. Measurement result of the obtained test bar was shown in Table 3.

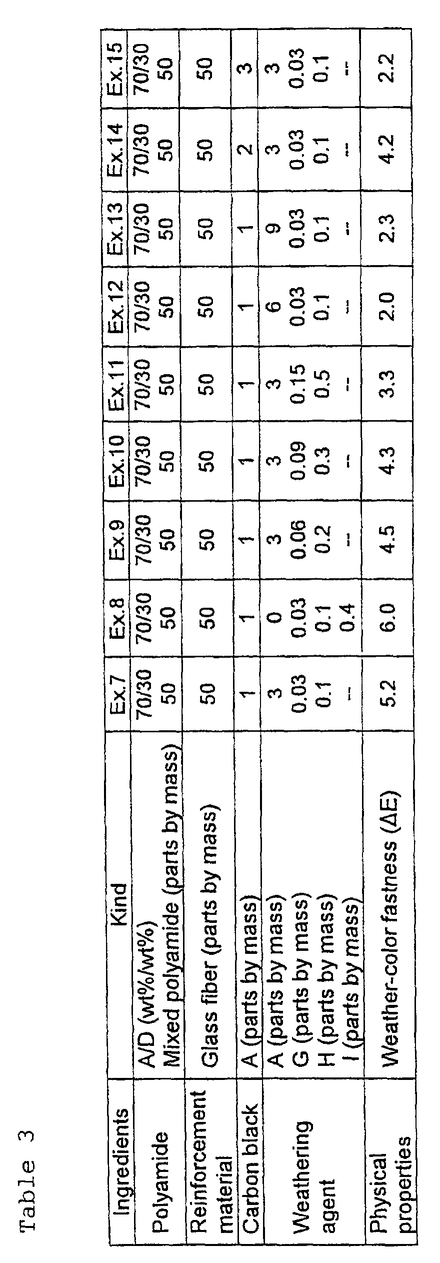

### Examples 8 to 13

Mixing ratios of the weathering agents A, G, H and I were set as shown in Table 3. Test bars were produced in the same manner as in Example 7 except for the above.

Measurement results of the obtained test bars were shown in Table 3.

### Examples 14 and 15

A mixing ratio of the carbon black A was set as shown in Table 3. Test bars were produced in the same manner as in Example 7 except for the above.

Measurement results of the obtained test bars were shown in Table 3.

In Examples 7 to 12, as the mixing ratio of the weathering agent was increased, weather-color fastness of the resin composition was improved. However, when the ratio exceeded a specific value, an effect of improving the weather-color fastness became an equilibrium state. Therefore, it was preferable to set the mixing ratio of the weathering agent within the range of 0.5 to 10 parts by mass with respect to the total of the resin composition.

As shown in Examples 14 and 15, the weather-color fastness was improved by increasing the mixing ratio of the carbon black as well.

### Examples 16 to 19

As a reinforcement material, not only the glass fiber but also the glass fiber and mica (made by Kuraray Co., Ltd., Suzorite Mica 200K) were used, and mixing ratios thereof were set as shown in Table 4. Test bars were produced in the same manner as in Example 7 except for the above.

Measurement results obtained were shown in Table 4.

**Table 4**

| Ingredients | Kind | Ex.16 | Ex.17 | Ex.18 | Ex.19 | Ex.20 |
|---|---|---|---|---|---|---|
| Polyamide | A/D (wt%/wt%) | 70/30 | 70/30 | 70/30 | 70/30 | 70/30 |
| | Mixed polyamide (parts by mass) | 50 | 50 | 50 | 50 | 50 |
| Reinforcement material | Glass fiber (parts by mass) | 40 | 30 | 25 | 20 | 40 |
| | Mica (parts by mass) | 10 | 20 | 25 | 30 | 10 |
| Carbon black | A (parts by mass) | 1 | 1 | 1 | 1 | 2 |
| Weathering agent | A (parts by mass) | 3 | 3 | 3 | 3 | 6 |
| | G (parts by mass) | 0.03 | 0.03 | 0.03 | 0.03 | 0.03 |
| | H (parts by mass) | 0.1 | 0.1 | 0.1 | 0.1 | 0.1 |
| | I (parts by mass) | -- | -- | -- | -- | 0.5 |
| Physical properties | Degree of surface glossiness (gloss) | 91 | 91 | 90 | 90 | 91 |
| | Surface roughness (µm) | 13 | 12 | 11 | 10 | 13 |
| | Flexural modulus (GPa) | 16 | 16 | 16 | 15 | 16 |
| | Flexural strength (MPa) | 250 | 240 | 230 | 200 | 250 |
| | Weather-color fastness (ΔE) | 5.7 | 3.5 | 5.9 | 7.5 | 2.2 |

### Example 20

Mixing ratios of the carbon black A and the weathering agents A, G, H and I were set as shown in Table 4. A test bar was produced in the same manner as in Example 16 except for the above.

Measurement results obtained were shown in Table 4.

As shown in Examples 16 to 19, when the mixing ratio of the mica as the reinforcement material was increased, the flexural strength was slightly lowered but the plane smoothness was improved as a molded article.

In Example 20, the mixing ratio of the carbon black and the weathering agent was high, so that the test bar excellent in weather-color fastness was obtained.

### Example 21

The carbon black A of 2 parts by mass was incorporated and the weathering agent A of 3 parts by mass was incorporated with respect to 100 parts by mass of the sum of 40 parts by mass of the mixed polyamide resin prepared in Example 7, and 40 parts by mass of the glass fiber and 20 parts by mass of the mica as a reinforcement material.

A test bar was produced in the same manner as in Example 1 except for the above.

Measurement results obtained were shown in Table 5.

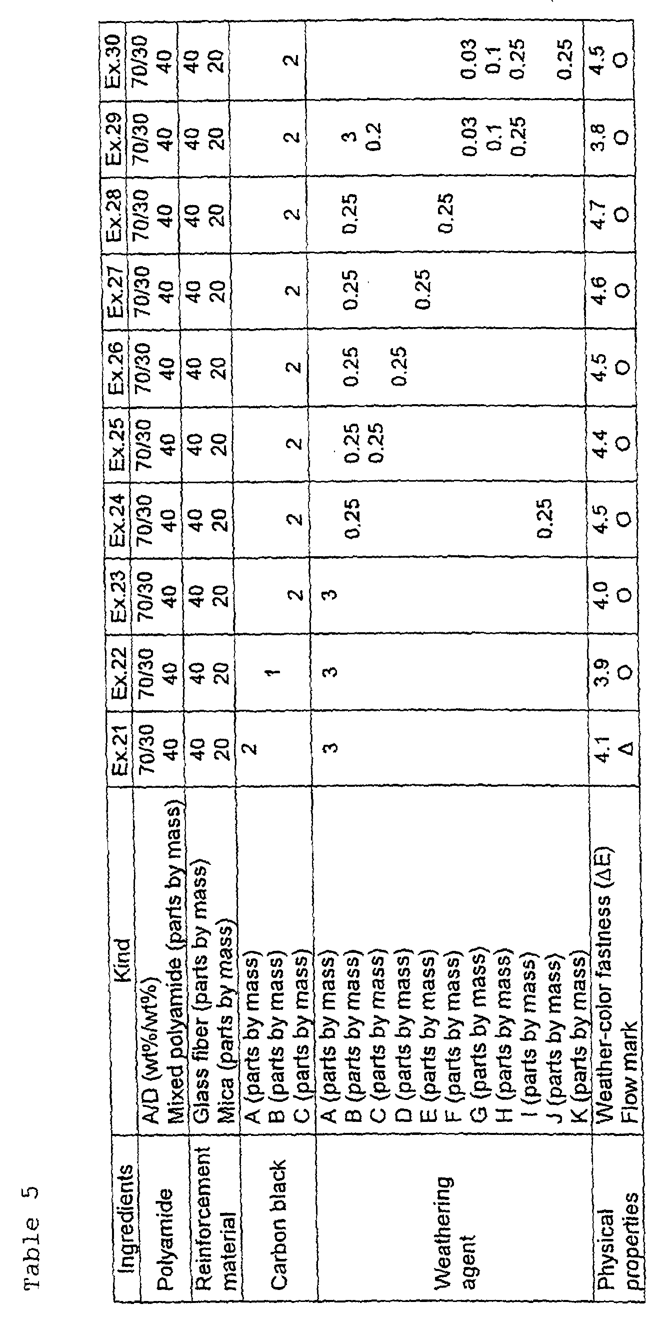

### Example 22

A carbon black B (made by Mitsubishi Chemical Corporation, MA7B) of 1 part by mass was incorporated instead of the carbon black A. The carbon black B was a raw carbon having an aggregate diameter of 71 nm.

A test bar was produced in the same manner as in Example 21 except for the above.

Measurement results obtained were shown in Table 5.

### Example 23

A carbon black C (made by Sumika Color Co., Ltd., SPAB-8K500) of 2 parts by mass was incorporated instead of the carbon black A. The carbon black C was a treated carbon comprising carbon black and AS resin and had an aggregate diameter of 78 nm.

A test bar was produced in the same manner as in Example 21 except for the above.

Measurement results obtained were shown in Table 5.

### Example 24

Weathering agents B and J were incorporated at the mixing ratios shown in Table 5 instead of the weathering agent A.

A test bar was produced in the same manner as in Example 23 except for the above.

Measurement results obtained were shown in Table 5.

### Examples 25 to 28

Weathering agents B to F were mixed at the mixing ratios shown in Table 5 instead of the weathering agent A.

Test bars were produced in the same manner as in Example 23 except for the above.

Measurement results obtained were shown in Table 5.

### Example 29

Weathering agents B, C, G, H and I were respectively mixed at the mixing ratio shown in Table 5 instead of the weathering agent A.

A test bar was produced in the same manner as in Example 23 except for the above.

Measurement results obtained were shown in Table 5.

### Example 30

Weathering agents G, H, I and K were respectively mixed at the mixing ratio shown in Table 5 instead of the weathering agent A.

A test bar was produced in the same manner as in Example 23 except for the above.

Measurement results obtained were shown in Table 5.

In every Example 21 to 30, the polyamide ingredient, the reinforcement material, the carbon black and the weathering agent were incorporated within the range of the present invention, so that the test bar with no flow mark excellent in weather-color fastness was obtained.

In Example 21, the polyamide ingredient, the reinforcement material, the carbon black and the weathering agent were respectively incorporated within the range of the present invention, so that the test bar excellent in weather-color fastness was obtained. However, as the carbon black A was the treated carbon having low heat resistance, a flow mark slightly grew around a gate of the molded article.

In Example 22, as the raw carbon having a suitable aggregate diameter was used, weather-color fastness was improved and a flow mark did not grow.

In every Example 23 to 30, the treated carbon not only having a suitable aggregate diameter but also formulated with AS resin excellent in heat resistance was used as a carbon black, so that the test bar with no flow mark excellent in weather-color fastness was obtained.

### Example 31

The carbon black A of 1 part by mass, the weathering agent A of 3 parts by mass, and calcium stearate (made by Sakai Chemical Industry Co., Ltd., SC-100) of 0.1 parts by mass, montanic acid ester wax (made by Clariant Japan K.K., Hochist Wax E) of 0.1 parts by mass and sodium montanate (made by Clariant Japan K.K., Hostamont NaV) of 0.1 parts by mass as a mold release agent were mixed with respect to 100 parts by mass of the sum of 50 parts by mass of the mixed polyamide resin prepared in Example 7 and 50 parts by mass of the glass fiber as a reinforcement material. Resin pellets were produced in the same manner as in Example 1 except for the above.

The resin pellets were dried at a temperature of 100°C for 12 hours.

Calcium stearate of 0.05 parts by mass and montanic acid ester wax of 0.05 parts by mass were externally added to the resin pellets and mixed by means of a tumbler.

Using the resultant resin pellets, an injection molding was performed by means of an injection molding machine (made by Toshiba Machine Co., Ltd., IS-100E) with a cylinder temperature set at 270°C and a mold temperature set at 80°C in order to obtain a test bar for evaluating mold release characteristics.

Evaluation result of the obtained test bar with respect to mold release characteristics was shown in Table 6.

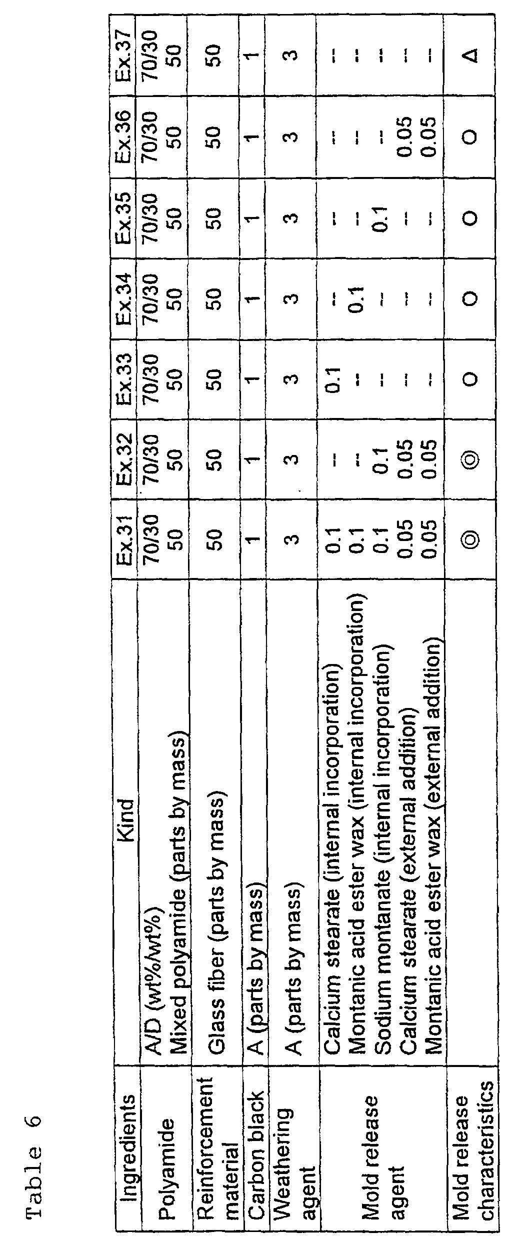

### Examples 32 to 36

Mixing ratios of Calcium stearate, montanic acid ester wax and sodium montanate as a mold release agent were set to the ratios shown in Table 6. Test bars were produced in the same manner as in Example 31 except for the above.

Evaluation results of the obtained test bars were shown in Table 6.

### Example 37

A test bar was produced in the same manner as in Example 31 except that the mold release agent was not incorporated.

Evaluation result of the obtained test bar was shown in Table 6.

In Examples 31 and 32, the mold release agents were internally incorporated and externally added, so that the test bars having the best mold release characteristics were obtained.

In Examples 33 to 36, the mold release agent was incorporated, so that the test bars having good mold release characteristics were obtained.

In Example 37, the mold release agent was not incorporated, so that the test bar having insufficient mold release characteristics was obtained.

### Industrial Applicability

According to the present invention, crystallinity of a polyamide resin composition is relaxed by adding a non-crystalline polyamide resin to a crystalline polyamide resin as a polyamide ingredient and, as a result, surface smoothness and surface glossiness are improved. Strength is given to a polyamide resin composition by adding a reinforcement material to a polyamide resin, so that a polyamide resin composition with high stiffness is obtained. A weather-color fastness is given to a resin composition by incorporating a carbon black. While it is impossible to give enough weather-color fastness for use for long time in the outdoors only by means of mixing the carbon black, further incorporation of a weathering agent in the present invention causes a synergistic effect of the carbon black and the weathering agent to give sufficient weather-color fastness.

Accordingly, such a polyamide resin composition can suitably be used for forming supporting parts for vehicles' mirror, such as a door mirror and a room mirror for car and a rearview mirror for motorcycle.

## Claims

1. A polyamide resin composition, **characterized by** that
0.2 to 5 parts by mass of a carbon black; and
0.01 to 10 parts by mass of a weathering agent;
are incorporated on the basis of 100 parts by mass in total of
30 to 90 parts by mass of a mixed polyamide resin containing a crystalline polyamide resin of 50 to 95 % by mass and a non-crystalline polyamide resin of 50 to 5 % by mass as a polyamide ingredient in such a way as to give 100 % by mass in total, and
10 to 70 parts by mass of a reinforcement material.

2. A polyamide resin composition according to claim 1, wherein the weathering agent is at least one kind of material selected from the group consisting of inorganic fine particles coated with cerium oxide, hindered amine compounds, copper compounds and/or halogenated potassium, benzotriazole ultraviolet light absorbers, benzophenone ultraviolet light absorbers, phenylsalicylate ultraviolet light absorbers, triazine ultraviolet light absorbers, cyano acrylate ultraviolet light absorbers, hindered phenol antioxidants, phosphite antioxidants, and thioether antioxidants.

3. Supporting parts for vehicles' mirror, comprising the polyamide resin composition according to claim 1 or 2.
